# EUROPEAN PATENT SPECIFICATION

(11) **EP 4 060 760 B1**
(45) Date of publication and mention of the grant of the patent: **29.10.2025**
(21) Application number: 20903274.7
(22) Date of filing: 18.12.2020
(51) Int. Cl.: H01M 4/36, H01M 10/052, H01M 4/131, H01M 4/136, H01M 4/505, H01M 4/58, H01M 4/62

(54) **POSITIVE ELECTRODE FOR LITHIUM SECONDARY BATTERY AND LITHIUM SECONDARY BATTERY INCLUDING THE POSITIVE ELECTRODE**
POSITIVELEKTRODE FÜR EINE LITHIUMSEKUNDÄRBATTERIE UND LITHIUMSEKUNDÄRBATTERIE DAMIT
ÉLECTRODE POSITIVE POUR BATTERIE SECONDAIRE AU LITHIUM ET BATTERIE SECONDAIRE AU LITHIUM LA COMPRENANT

(30) Priority: 20.12.2019 KR 20190172316
(43) Date of publication of application: 21.09.2022
(73) Proprietor: LG Energy Solution, Ltd., Seoul 07335 (KR)
(72) Inventor: KIM, Dong Hwi, Daejeon 34122 (KR); LEE, Dae Jin, Daejeon 34122 (KR); HWANG, Jin Tae, Daejeon 34122 (KR); KIM, Hyeong Il, Daejeon 34122 (KR); CHAE, Seul Ki, Daejeon 34122 (KR); JUNG, Wang Mo, Daejeon 34122 (KR); LEE, Dong Hun, Daejeon 34122 (KR)
(74) Representative: Hoffmann Eitle
(86) International application number: PCT/KR2020/018647
(87) International publication number: WO 2021/125873

(56) References cited:
- EP-A1- 3 128 595
- JP-A- 2011 228 293
- KR-A- 20110 127 209
- KR-A- 20140 018 543
- KR-A- 20140 018 543
- KR-A- 20140 138 079
- KR-A- 20150 132 463
- US-A1- 2017 077 547
- HOGG R: "Issues in Particle Size Analysis", KONA POWDER AND PARTICLE JOURNAL, 1 January 2008 (2008-01-01), XP093004777, Retrieved from the Internet <URL:https://www.jstage.jst.go.jp/article/kona/26/0/26_2008009/_pdf/-char/en> [retrieved on 20221205]

## Description

### TECHNICAL FIELD

This application claims priority from Korean Patent Application No. 10-2019-0172316, filed on December 20, 2019.

The present invention relates to a positive electrode for a lithium secondary battery and a lithium secondary battery including the positive electrode.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal composite oxides have been used as a positive electrode active material of the lithium secondary battery, and, among these oxides, a lithium cobalt composite metal oxide, such as LiCoO₂, having a high operating voltage and excellent capacity characteristics has been mainly used. However, since the LiCoO₂ has very poor thermal properties due to an unstable crystal structure caused by delithiation and is expensive, there is a limitation in using a large amount of the LiCoO₂ as a power source for applications such as electric vehicles.

Lithium manganese-based oxides (LiMnO₂ or LiMn₂O₄, etc.), lithium iron phosphate compounds (LiFePO₄, etc.), or lithium nickel composite metal oxides (LiNiO₂, etc.) have been developed as materials for replacing the LiCoO₂. Among these materials, the lithium manganese-based oxide has a limitation in that stability is reduced due to poor oxidation stability at high voltage, and had a limitation in that output characteristics were inferior to those of a positive electrode active material conventionally used. US 2017/0077547 A1 describes a composite electrolyte including lithium-containing oxide particles and an electrolytic composition including lithium ions, an organic solvent and a polymer. KR 2014 0018543 A describes a mixed cathode active material using LFP in which a part of Fe in the LFP is replaced with other elements such as Mn.

Thus, there is a need to develop a lithium manganese-based oxide which may improve structural stability and output characteristics.

### DISCLOSURE OF THE INVENTION

### TECHNICAL PROBLEM

An aspect of the present invention provides a positive electrode in which output characteristics and stability are improved by including a positive electrode active material layer with a two-layer structure.

Another aspect of the present invention provides a lithium secondary battery including the positive electrode.

### TECHNICAL SOLUTION

According to an aspect of the present invention, there is provided a positive electrode including a positive electrode active material layer formed on a positive electrode collector, wherein the positive electrode active material layer has a two-layer structure including: a first positive electrode active material layer which is formed on the positive electrode collector and includes a first positive electrode active material represented by Formula 1 and a second positive electrode active material represented by Formula 2; and a second positive electrode active material layer which is formed on the first positive electrode active material layer and includes a third positive electrode active material represented by Formula 1,

wherein an average particle diameter D₅₀ of the third positive electrode active material is the same or different from an average particle diameter D₅₀ of the first positive electrode active material.

[Formula 1] Li₁₊ₐMn_{2-b}M¹_{b}O_{4-c}A_{c}

In Formula 1, M¹ is at least one element selected from the group consisting of aluminum (Al), lithium (Li), magnesium (Mg), zinc (Zn), boron (B), tungsten (W), nickel (Ni), cobalt (Co), iron (Fe), chromium (Cr), vanadium (V), ruthenium (Ru), copper (Cu), cadmium (Cd), silver (Ag), yttrium (Y), scandium (Sc), gallium (Ga), indium (In), arsenic (As), antimony (Sb), platinum (Pt), gold (Au), and silicon (Si), A is at least one element selected from the group consisting of fluorine (F), chlorine (Cl), bromine (Br), iodine (I), astatine (At), and sulfur (S), and 0≤a≤0.05, 0≤b≤0.5, and 0≤c≤0.1, and

[Formula 2] Li₁₊ₐ₁Mn_{z}Fe_{1-z}PO_{4-y}A¹_{y}

In Formula 2, A¹ is at least one element selected from the group consisting of F, Cl, Br, I, At, and S, and 0≤a1≤0.03, 0≤y≤0.8, and 0<z<1.

According to another aspect of the present invention, there is provided a lithium secondary battery including the positive electrode.

### ADVANTAGEOUS EFFECTS

According to the present invention, since a positive electrode including a positive electrode active material layer with a two-layer structure is prepared, output characteristics and stability may be improved when the positive electrode is used in a battery.

Also, an effect of improving the output characteristics may be achieved by using different conductive agents which each are included in each layer of the positive electrode active material layer with a two-layer structure.

### BRIEF DESCRIPTION OF THE DRAWINGS

FIG. 1 is a structural view of a positive electrode having a two-layer structure according to the present invention; and
FIG. 2 is a structural view of a positive electrode having a conventional single-layer structure.

### [Description of the Symbols]

10: Current collector
20: First positive electrode active material layer
30: Second positive electrode active material layer
20': Positive electrode active material layer
100: Positive electrode

### MODE FOR CARRYING OUT THE INVENTION

Hereinafter, the present invention will be described in more detail.

In the present invention, the expression "crystalline" means a single crystal unit having a regular atomic arrangement. A size of the crystalline may be measured by analyzing X-ray diffraction (XRD) data, which are obtained by X-ray diffraction analysis of positive electrode active material powder, using a Rietveld refinement method. In this case, the X-ray diffraction analysis was performed using a Bruker D8 Endeavor (Cu-Kα, A=1.54 Å) equipped with a LynxEye XE-T-position sensitive detector, wherein a sample was put in a groove of a holder for general powder, a surface of the sample was leveled using a slide glass, the sample was filled so that a sample height matched an edge of the holder, and measurement was then made using a fixed divergence slit (FDS) of 0.5° and a 2θ range of 15° to 90° under conditions in which a step size = 0.02° and total scan time = about 20 minutes. Instrumental broadening during the size analysis of the crystalline was considered by using Fundamental Parameter Approach (FPA) built into a Bruker TOPAS program, and entire peaks in the measurement range were used during fitting.

The expression "average particle diameter D₅₀" in the present invention denotes a particle diameter at 50% of cumulative distribution of area according to the particle diameter. The average particle diameter D₅₀ may be measured by using a laser diffraction method. Specifically, after dispersing measurement target powder in a dispersion medium, the dispersion medium is introduced into a commercial laser diffraction particle size measurement instrument (e.g., Microtrac S3500) and a particle size distribution is calculated by measuring a difference in diffraction patterns due to a particle size when particles pass through a laser beam. The D₅₀ may be measured by calculating a particle diameter at 50% of the cumulative distribution of area according to the particle diameter using the measurement instrument.

### Positive Electrode

A positive electrode for a secondary battery according to an embodiment of the present invention is a positive electrode including a positive electrode active material layer formed on a positive electrode collector, wherein the positive electrode active material layer has a two-layer structure including: a first positive electrode active material layer which is formed on the positive electrode collector and includes a first positive electrode active material and a second positive electrode active material; and a second positive electrode active material layer which is formed on the first positive electrode active material layer and includes a third positive electrode active material.

Hereinafter, the positive electrode for a secondary battery according to the present invention will be described in more detail.

First, the positive electrode according to the present invention has a structure in which a positive electrode active material with a two-layer structure is formed on a positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

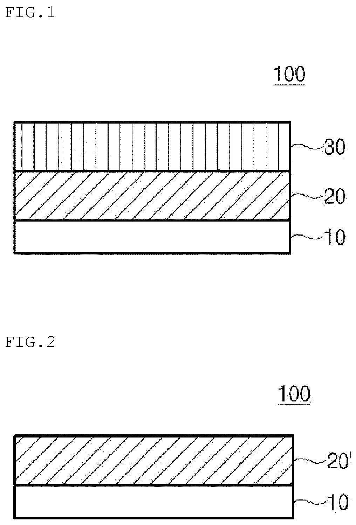

As illustrated in FIG. 1, a positive electrode 100 according to the present invention has a two-layer structure which includes a first positive electrode active material layer 20 formed on a positive electrode collector 10 and a second positive electrode active material layer 30 formed on the first positive electrode active material layer 20.

Since the positive electrode active material layer with a two-layer structure is used, a high-capacity LiMn₂O₄ positive electrode active material, which has not been used due to a problem, for example, a decrease in oxidation stability at high voltage when a positive electrode including a positive electrode active material layer 20' with a conventional single-layer structure as illustrated in FIG. 2 is used, may be used, and, accordingly, output characteristics of the secondary battery may be improved. Also, since an appropriate mixing ratio of a conductive agent to a binder varies depending on a type of each positive electrode active material, it is possible to overcome processing problems, such as a decrease in coating stability caused by an increase in viscosity due to gelation, when the appropriate mixing ratios are respectively used.

For example, even if the above-described first and second positive electrode active materials are used, in a case in which the first and second positive electrode active materials are used in a single-layer structure rather than a two-layer structure, since it is difficult to use the conductive agent and the binder depending on the type of the positive electrode active material, a problem, such as gelation, may occur, and, accordingly, output characteristics or stability may be reduced.

Specifically, the first positive electrode active material layer includes a first positive electrode active material represented by the following Formula 1 and a second positive electrode active material represented by the following Formula 2.

[Formula 1] Li₁₊ₐMn_{2-b}M¹_{b}O_{4-c}A_{c}

In Formula 1, M¹ is at least one element selected from the group consisting of aluminum (Al), lithium (Li), magnesium (Mg), zinc (Zn), boron (B), tungsten (W), nickel (Ni), cobalt (Co), iron (Fe), chromium (Cr), vanadium (V), ruthenium (Ru), copper (Cu), cadmium (Cd), silver (Ag), yttrium (Y), scandium (Sc), gallium (Ga), indium (In), arsenic (As), antimony (Sb), platinum (Pt), gold (Au), and silicon (Si), A is at least one element selected from the group consisting of fluorine (F), chlorine (Cl), bromine (Br), iodine (I), astatine (At), and sulfur (S), and 0≤a≤0.05, 0≤b≤0.5, and 0≤c≤0.1.

[Formula 2] Li₁₊ₐ₁Mn_{z}Fe_{1-z}PO_{4-y}A¹_{y}

In Formula 2, A¹ is at least one element selected from the group consisting of F, Cl, Br, I, At, and S, and 0≤a1≤0.03, 0≤y≤0.8, and 0<z<1.

In this case, the first positive electrode active material has an average particle diameter D₅₀ of 3 µm to 10 µm, preferably 4 µm to 8 µm, and more preferably 5 µm to 7 µm, and may be in the form of a single particle having a crystalline size of 100 nm to 500 nm, preferably 200 nm to 300 nm, and more preferably 220 nm to 270 nm.

In a case in which the first positive electrode active material has the above-described crystalline size, since high rolling density may be achieved while having a high specific surface area, energy density per volume of the electrode may be increased.

In a case in which the average particle diameter D₅₀ of the first positive electrode active material is within the above-described range, output characteristics and high capacity performance may be more improved than a case where the average particle diameter D₅₀ is outside the above range.

With respect to the first positive electrode active material, it exhibits excellent capacity characteristics, but it had limitations in that stability of a battery was reduced when it was used in the battery due to poor oxidation stability at high voltage and, as a result, output characteristics were poor.

Thus, structural stability may be improved by further including a positive electrode active material with a structurally stable olivine structure, specifically the second positive electrode active material represented by Formula 2 in the first positive electrode active material layer. Since the second positive electrode active material contains both manganese (Mn) and Fe, an operating voltage is higher than that of an active material containing only Fe and resulting energy is excellent, and thus, a voltage due to a voltage drop is improved to be advantageous in terms of resistance characteristics.

According to the present invention, the first positive electrode active material and the second positive electrode active material, which are included in the first positive electrode active material layer, may be included in a weight ratio of 5:5 to 6:4. In a case in which the first positive electrode active material and the second positive electrode active material are included within the above-described weight ratio range, adhesion and contact may be improved. For example, in a case in which the amount of the second positive electrode active material is greater than the amount of the first positive electrode active material outside the above-described range, the adhesion of the electrode may be reduced.

The first and second positive electrode active materials may be included in amount of 80 wt% to 99 wt%, for example, 85 wt% to 98 wt% based on a total weight of the positive electrode active material layer. Excellent capacity characteristics may be exhibited when the first and second positive electrode active materials are included within the above-described amount range.

Also, the first positive electrode active material layer may further include a conductive agent and selectively a binder, if necessary, in addition to the above-described first and second positive electrode active materials.

Specifically, the conductive agent included in the first positive electrode active material layer is used to provide conductivity to the electrode, wherein any conductive agent may be used as long as it has electron conductivity without causing adverse chemical changes in the battery. Specifically, the conductive agent included in the first positive electrode active material layer may include a line-type conductive agent, and, for example, may include carbon nanotubes having an average length of 0.1 µm to 1 µm.

In a case in which the line-type conductive agent is included in the first positive electrode active material layer as in the present invention, since an effect of improving a conductive path may be achieved, lithium ion conductivity is improved according to conductivity improvement even if a relatively small amount of the conductive agent is included in the positive electrode active material layer when the line-type conductive agent is used, and thus, an effect of improving energy density and ionic conductivity may be achieved. For example, the line-type conductive agent may be included in amount of 0.1 wt% to 0.4 wt% based on a total weight of the first positive electrode active material layer. In a case in which the line-type conductive agent is included in an amount within the above-described range, an effect of improving output characteristics, capacity characteristics, and high-temperature properties may be further achieved.

The binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. For example, the binder may be included in an amount of 1.0 part by weight to 10.0 parts by weight, preferably 1.0 part by weight to 5.0 parts by weight, and more preferably 1.0 part by weight to 1.8 part by weight based on the total weight of the first positive electrode active material layer.

The first positive electrode active material layer may have a thickness of 50 µm to 130 µm, for example, 50 µm to 110 µm. For example, in a case in which the thickness of the first positive electrode active material layer is greater than the above range, since an ion diffusion path of ions in the electrode is increased, the output characteristics of the battery including the same may be degraded.

The positive electrode of the present invention includes a second positive electrode active material layer which is formed on the above-described first positive electrode active material layer and includes a third positive electrode active material represented by the following Formula 1. The third positive electrode active material has the same composition as the first positive electrode active material and has an average particle diameter D₅₀ which is the same or different from that of the first positive electrode active material.

[Formula 1] Li₁₊ₐMn_{2-b}M¹_{b}O_{4-c}A_{c}

In Formula 1, M¹ is at least one element selected from the group consisting of Al, Li, Mg, Zn, B, W, Ni, Co, Fe, Cr, V, Ru, Cu, Cd, Ag, Y, Sc, Ga, In, As, Sb, Pt, Au, and Si, A is at least one element selected from the group consisting of F, Cl, Br, I, At, and S, and 0≤a≤0.05, 0≤b≤0.5, and 0≤c≤0.1.

Since the second positive electrode active material layer includes the positive electrode active material represented by Formula 1, a high-capacity secondary battery may be achieved.

In an embodiment of the present invention, the third positive electrode active material has an average particle diameter D₅₀ of 3 µm to 20 µm, preferably 4 µm to 15 µm, and most preferably 5 µm to 13 µm, and may be in the form of a single particle having a crystalline size of 100 nm to 500 nm, for example, 100 nm to 300 nm.

In an embodiment of the present invention, the average particle diameter D₅₀ of the third positive electrode active material may be the same as the average particle diameter D₅₀ of the first positive electrode active material. In this case, there is an advantage in that output is improved.

In an embodiment of the present invention, the average particle diameter D₅₀ of the third positive electrode active material may be different from the average particle diameter D₅₀ of the first positive electrode active material. In this case, there is an advantage in that stability is improved.

Also, the second positive electrode active material layer may further include a conductive agent and selectively a binder, if necessary, in addition to the above-described third positive electrode active material.

Specifically, the conductive agent included in the second positive electrode active material layer is used to provide conductivity to the electrode, wherein any conductive agent may be used as long as it has electron conductivity without causing adverse chemical changes in the battery. Specifically, the conductive agent included in the second positive electrode active material layer may include a point-type conductive agent, and, for example, the point-type conductive agent may include at least one selected from the group consisting of carbon black having an average particle diameter D₅₀ of 5 nm to 50 nm, acetylene black, Ketjen black, channel black, furnace black, lamp black, and thermal black.

In a case in which the point-type conductive agent having an average particle diameter D₅₀ of 5 nm to 50 nm is included in the second positive electrode active material layer as in the present invention, since the conductive agent not only improves the conductive path, but also performs a buffering effect between the positive electrode active material particles, an effect of suppressing breakage of the active material particles during rolling may be achieved when the point-type conductive agent is used in the battery. For example, the point-type conductive agent may be included in amount of 1.0 wt% to 3.0 wt% based on a total weight of the second positive electrode active material layer. In a case in which the point-type conductive agent is included in an amount within the above-described range, the effect of suppressing the breakage of the particles in the electrode may be further achieved.

The binder included in the second positive electrode active material layer may be the same as that included in the above-described first positive electrode active material layer.

The second positive electrode active material layer may have a thickness of 50 µm to 130 µm, for example, 50 µm to 110 µm. For example, in a case in which the thickness of the second positive electrode active material layer is greater than the above range, since the ion diffusion path in the electrode is increased, the output characteristics of the battery including the same may be degraded.

In order to prepare a secondary battery having high capacity characteristics as in the present invention, a compound having high capacity characteristics is used as a first positive electrode active material, but, in this case, in order to improve stability of the battery, a second positive electrode active material having high stability is mixed to form a first positive electrode active material layer, and a second positive electrode active material layer having high capacity characteristics may be further formed on a surface of the first positive electrode active material layer to improve both stability and output characteristics when the first and second positive electrode active material layers are used in the battery.

Preferably, a thickness ratio of the first positive electrode active material layer to the second positive electrode active material layer may be in a range of 3:7 to 7:3, more preferably 3:7 to 5:5, and most preferably 3:7 to 4:6. Particularly, an effect of improving the stability and output characteristics may be further achieved by including the first positive electrode active material layer and the second positive electrode active material layer within the above-described range.

The positive electrode may be prepared according to a typical method of preparing a positive electrode except that the positive electrode active material layer with a two-layer structure is formed. Specifically, a composition for forming a first positive electrode active material layer, which is prepared by dissolving or dispersing the above-described first positive electrode active material, second positive electrode active material, conductive agent, and selectively binder in a solvent, is coated on the positive electrode collector, dried, and then rolled, and, subsequently, after a composition for forming a second positive electrode active material layer including the third positive electrode active material is coated on the positive electrode collector having the first positive electrode active material layer formed thereon, the positive electrode may be prepared by drying and rolling the coated positive electrode collector. In this case, types and amounts of the first positive electrode active material, the second positive electrode active material, the third positive electrode active material, the binder, and the conductive agent are the same as those previously described.

The solvent may be a solvent normally used in the art, wherein the solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

### Lithium Secondary Battery

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further selectively include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer selectively includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 parts by weight to 99 parts by weight based on 100 parts by weight of a total weight of the negative electrode active material layer.

The binder is a component that assists in the binding between the conductive agent, the active material, and the current collector, wherein the binder is typically added in an amount of 0.1 part by weight to 10 parts by weight based on 100 parts by weight of the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be added in an amount of 10 parts by weight or less, for example, 5 parts by weight or less based on 100 parts by weight of the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a negative electrode material mixture, which is prepared by dissolving or dispersing selectively the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN (C₂F₅SO₂)₂, LiN (CF₃SO₂)₂, LiCl, LiI, or LiB (C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 part by weight to 5 parts by weight based on 100 parts by weight of a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples.

### <Examples>

### Example 1.

LiMn₂O₄ having an average particle diameter (D₅₀) of 6 µm and a crystalline size of 220 nm to 270 nm, LiMn_{0.7}Fe_{0.3}PO₄ having an average particle diameter (D₅₀) of 6 µm, a carbon nanotube conductive agent, and a non-aqueous binder (polyvinylidene fluoride, PVdF) were mixed in a N-methylpyrrolidone (NMP) solvent at a weight ratio of 66.5:28.5:2.5:2.5 to prepare a slurry for forming a first positive electrode active material layer.

Separately, LiMn₂O₄ having an average particle diameter of 6 µm, a point-type conductive agent (super P) having an average particle diameter (D₅₀) of 30 nm, and a PVdF binder were mixed in a N-methylpyrrolidone (NMP) solvent at a weight ratio of 95:2.5:2.5 to prepare a slurry for forming a second positive electrode active material layer.

The above-prepared slurry for forming a first positive electrode active material layer was coated on a 12 µm thick aluminum foil, then dried at 120°C, and roll-pressed to have a porosity of 30% to form a 100 µm thick first positive electrode active material layer on a surface of the aluminum foil.

Subsequently, the slurry for forming a second positive electrode active material layer was coated on the positive electrode collector on which the first positive electrode active material layer was formed, dried at 120°C, and roll-pressed to have a porosity of 30% to prepare a positive electrode including a positive electrode active material layer with a two-layer structure in which a 100 µm thick second positive electrode active material layer was formed on the first positive electrode active material layer.

### Example 2.

A positive electrode including a positive electrode active material layer with a two-layer structure was prepared in the same manner as in Example 1 except that a 60 µm thick first positive electrode active material layer and a 140 µm thick second positive electrode active material layer were formed on a surface of an aluminum foil to control a thickness ratio of the first positive electrode active material layer to the second positive electrode active material layer to be 3:7.

### Example 3.

A positive electrode including a positive electrode active material layer with a two-layer structure was prepared in the same manner as in Example 1 except that a 140 µm thick first positive electrode active material layer and a 60 µm thick second positive electrode active material layer were formed on a surface of an aluminum foil to control a thickness ratio of the first positive electrode active material layer to the second positive electrode active material layer to be 7:3.

### Example 4.

A positive electrode including a positive electrode active material layer with a two-layer structure was prepared in the same manner as in Example 1 except that LiMn₂O₄ having an average particle diameter of 12 µm, instead of the LiMn₂O₄ having an average particle diameter of 6 µm, was used in a slurry for forming a second positive electrode active material layer.

### Example 5.

A positive electrode including a positive electrode active material layer with a two-layer structure was prepared in the same manner as in Example 1 except that a point-type conductive agent (super P) having an average particle diameter (D₅₀) of 30 nm was used as a conductive agent during the preparation of a slurry for forming a first positive electrode active material layer and a slurry for forming a second positive electrode active material layer.

### Comparative Example 1.

LiMn₂O₄ having an average particle diameter of 6 µm, a point-type conductive agent (super P) having an average particle diameter (D₅₀) of 30 nm, and a PVdF binder were mixed in a N-methylpyrrolidone (NMP) solvent at a weight ratio of 95:2.5:2.5 to prepare a positive electrode active material slurry, and a 200 µm thick positive electrode active material layer with a single-layer structure was formed on a 12 µm thick aluminum foil by using the positive electrode active material slurry.

### Comparative Example 2.

LiMn_{0.7}Fe_{0.3}PO₄ having an average particle diameter of 6 µm, a point-type conductive agent, and a PVdF binder were mixed in a N-methylpyrrolidone (NMP) solvent at a weight ratio of 95:2.5:2.5 to prepare a positive electrode active material slurry, and a 200 µm thick positive electrode active material layer with a single-layer structure was formed on a 12 µm thick aluminum foil by using the positive electrode active material slurry.

### Comparative Example 3.

LiMn₂O₄ having an average particle diameter of 6 µm, LiMn_{0.7}Fe_{0.3}PO₄ having an average particle diameter of 6 µm, a point-type conductive agent (super P) having an average particle diameter (D₅₀) of 30 nm, and a PVdF binder were mixed in a N-methylpyrrolidone (NMP) solvent at a weight ratio of 66.5:28.5:2.5:2.5 to prepare a positive electrode active material slurry.

The above-prepared positive electrode active material slurry was coated on a 12 µm thick aluminum foil and then dried at 120°C to prepare a positive electrode including a 200 µm thick positive electrode active material layer with a single-layer structure on a surface of the aluminum foil.

### Comparative Example 4.

A positive electrode including a positive electrode active material layer with a two-layer structure was prepared in the same manner as in Example 1 except that LiMn₂O₄ was not used during the preparation of a slurry for forming a first positive electrode active material layer, but LiMn_{0.7}Fe_{0.3}PO₄ having an average particle diameter (D₅₀) of 6 µm, a carbon nanotube conductive agent, and PVdF were mixed in a N-methylpyrrolidone (NMP) solvent at a weight ratio of 95:2.5:2.5 to prepare the slurry for forming a first positive electrode active material layer.

### Comparative Example 5.

A positive electrode including a positive electrode active material layer with a two-layer structure was prepared in the same manner as in Example 5 except that LiFePO₄ having an average particle diameter (D₅₀) of 6 µm, instead of the LiMn_{0.7}Fe_{0.3}PO₄ having an average particle diameter (D₅₀) of 6 µm, was used during the preparation of a slurry for forming a first positive electrode active material layer.

### <Experimental Examples>

### Experimental Example 1: Output Characteristics Evaluation

Room-temperature and low-temperature output characteristics were measured using secondary batteries which included the positive electrodes of Examples 1 to 5 and Comparative Examples 1 to 5, respectively.

In order to measure the above-described characteristics, the secondary batteries were first prepared by using the positive electrodes respectively prepared in Examples 1 to 5 and Comparative Examples 1 to 5. Specifically, the positive electrodes prepared in Examples 1 to 5 and Comparative Examples 1 to 5 were used, and artificial graphite as a negative electrode active material, furnace black (super C) as a conductive agent, and carboxymethyl cellulose and a styrene-butadiene rubber, as a binder, were mixed at a weight ratio of 96.5:0.5:3.0 and added to H₂O, as a solvent, to prepare a negative electrode active material slurry. A 250 µm thick copper foil was coated with the prepared slurry, dried, and then roll-pressed to prepare a negative electrode.

After an electrode assembly was prepared by disposing a polypropylene/polyethylene fabric separator between the above-prepared positive electrode and negative electrode, the electrode assembly was put in a battery case, and an electrolyte solution was injected into the case to prepare a lithium secondary battery. In this case, the electrolyte solution was injected such that vinylene carbonate (VC) was included in an amount of 2 wt% based on 100 parts by weight of a total weight of an electrolyte solution, in which 1.0 M LiPF₆ was dissolved in an organic solvent in which ethylenecarbonate (EC):dimethyl carbonate (DMC):diethyl carbonate (DEC) were mixed in a volume ratio of 1:2:1, as the electrolyte solution, to prepare the lithium secondary batteries according to Examples 1 to 5 and Comparative Examples 1 to 5.

Output characteristics at room-temperature and low-temperature were checked by using the lithium secondary batteries prepared in Examples 1 to 5 and Comparative Examples 1 to 5, and the results thereof are presented in Table 1 below. Specifically, each of the lithium secondary batteries prepared in Examples 1 to 5 and Comparative Examples 1 to 5 was discharged by a Δ SOC of 15 (from a state of charge (SOC) of 35% to an SOC of 20%) at -10°C, and the low-temperature output characteristics of the present invention were measured by checking a change in voltage value through a 0.4 C IR drop for 1,350 seconds.

Each lithium secondary battery was discharged by a Δ SOC of 15 (from an SOC of 35% to an SOC of 20%) at room temperature (25°C), and the room-temperature output characteristics of the present invention were measured by checking a change in voltage value through a 0.4 C IR drop for 1,350 seconds. The results of the above-described low-temperature output characteristics and room-temperature output characteristics are presented in Table 1 below.

**[Table 1]**

| | IR drop (ΔV) | |
|---|---|---|
| | Low temperature | Room temperature |
| Example 1 | 0.21 | 0.1 |
| Example 2 | 0.28 | 0.14 |
| Example 3 | 0.38 | 0.21 |
| Example 4 | 0.34 | 0.17 |
| Example 5 | 0.33 | 0.16 |
| Comparative Example 1 | 0.53 | 0.30 |
| Comparative Example 2 | 0.48 | 0.26 |
| Comparative Example 3 | 0.50 | 0.28 |
| Comparative Example 4 | 0.46 | 0.26 |
| Comparative Example 5 | 0.44 | 0.25 |

As illustrated in Table 1, with respect to the secondary batteries prepared in Examples 1 to 5, it may be confirmed that voltage drop rates at both low temperature and room temperature were improved in comparison to those of the secondary batteries of Comparative Examples 1 to 5. Particularly, in a case in which the first positive electrode active material represented by Formula 1 was not included in the first positive electrode active material layer even if the two-layered positive electrode was configured (Comparative Example 4), or the active material without including manganese, instead of the second positive electrode active material represented by Formula 2, was used (Comparative Example 5), it may be confirmed that room-temperature and low-temperature output characteristics were inferior to those of the examples according to the present invention.

### Experimental Example 2: Overcharge Test

Overcharge test was performed using the secondary batteries of Examples 1 to 5 and Comparative Examples 1 to 5 which were prepared in Experimental Example 1. Specifically, after each secondary battery was charged at 0.33 C to a full voltage (4.2 V) and cut-off charged at 0.05 C, a two-hour rest period was given to stabilize the voltage. After the cell voltage was stabilized, overcharge was performed at 1 C and 8.5 V, and the results thereof are presented in Table 2 below.

**[Table 2]**

| | Maximum temperature during overcharge (°C) |
|---|---|
| Example 1 | 110 |
| Example 2 | 120 |
| Example 3 | 145 |
| Example 4 | 132 |
| Example 5 | 128 |
| Comparative Example 1 | - |
| Comparative Example 2 | 155 |
| Comparative Example 3 | - |
| Comparative Example 4 | 153 |
| Comparative Example 5 | 148 |

Referring to Table 2, with respect to the secondary batteries prepared in Examples 1 to 5 and Comparative Examples 2, 4, and 5, it may be confirmed that overcharge ended at 110°C or higher when the overcharge occurred. However, with respect to Comparative Examples 2, 4, and 5, it was found that the temperature was increased to a higher temperature than those of the examples during overcharge. In contrast, with respect to the secondary batteries of Comparative Examples 1 and 3, temperatures at which overcharge ended were not measured due to ignition or explosion of the batteries when the overcharge occurred.

### Experimental Example 3: Nail Penetration Test

Nail penetration test was performed using the secondary batteries of Examples 1 to 5 and Comparative Examples 1 to 5 which were prepared in Experimental Example 1. Specifically, after the secondary batteries of Examples 1 to 5 and Comparative Examples 1 to 5 were fully charged at room temperature, safety evaluation test of the secondary battery was performed by measuring occurrence or non-occurrence of ignition and ignition temperature when the secondary battery was penetrated with a nail under a GB/T condition (nail diameter 5 mm, penetration speed 25 mm/sec). An internal short circuit of the lithium secondary battery occurred due to the penetrating metal nail, and the battery generated heat due to the internal short circuit, wherein, in a case in which the heat generation leaded to ignition, it was evaluated that safety of the secondary battery was very poor. If there was no ignition during 12 hours after the nail penetration, it was marked as "P", and if ignition occurred, it was marked as "F (fail)", and the results thereof are presented in Table 3 below.

**[Table 3]**

| | Occurrence or non-occurrence of ignition | Temperature at which ignition occurred (°C) |
|---|---|---|
| Example 1 | P | - |
| Example 2 | P | - |
| Example 3 | P | - |
| Example 4 | P | - |
| Example 5 | P | - |
| Comparative Example 1 | F | 60 |
| Comparative Example 2 | P | - |
| Comparative Example 3 | F | 84 |
| Comparative Example 4 | F | 76 |
| Comparative Example 5 | F | 88 |

As illustrated in Table 3, with respect to the secondary batteries prepared in Examples 1 to 5, it may be confirmed that ignition did not occur even after 12 hours after the nail penetration test. In contrast, with respect to the secondary batteries prepared in Comparative Examples 1 and 3 to 5, it may be confirmed that ignition occurred after the nail penetration test. Since ignition did not occur in Comparative Example 2 among the tests using the positive electrode with a single-layer structure, it may be confirmed that the safety of the battery was improved when the LMFP positive electrode active material having a lower electrical conductivity than the LMO was included. According to the comparison of the results of Comparative Examples 4 and 5 and Examples 1 to 5, with respect to the two-layer structure, since the two different positive electrode active materials were used together in the first positive electrode active material layer close to the current collector, it may be understood that stability was improved due to a blending effect.

### Experimental Example 4: Resistance Characteristics

Resistance characteristics were measured using the secondary batteries of Examples 1 to 5 and Comparative Examples 1 to 5 which were prepared in Experimental Example 1. Specifically, each of the secondary batteries of Examples 1 to 5 and Comparative Examples 1 to 5 was charged at a constant current of 0.5 C to 4.2 V at 45°C and cut-off charged at 0.05 C. Subsequently, each secondary battery was discharged at a constant current of 0.5 C to 3.0 V.

The charging and discharging behaviors were set as one cycle, and, after this cycle was repeated 100 times, resistance characteristics of the secondary batteries of Examples 1 to 5 and Comparative Examples 1 to 5 were measured, and the results thereof are presented in the following Table 4.

**[Table 4]**

| | Resistance increase rate (%) |
|---|---|
| Example 1 | 115 |
| Example 2 | 122 |
| Example 3 | 138 |
| Example 4 | 133 |
| Example 5 | 130 |
| Comparative Example 1 | 180 |
| Comparative Example 2 | 156 |
| Comparative Example 3 | 165 |
| Comparative Example 4 | 148 |
| Comparative Example 5 | 145 |

As illustrated in Table 4, it may be confirmed that resistance increase rates of the secondary batteries prepared in Examples 1 to 5 were improved in comparison to those of the secondary batteries of Comparative Examples 1 to 5.

## Claims

1. A positive electrode comprising a positive electrode active material layer formed on a positive electrode collector,
wherein the positive electrode active material layer has a two-layer structure including: a first positive electrode active material layer which is formed on the positive electrode collector and includes a first positive electrode active material represented by Formula 1 and a second positive electrode active material represented by Formula 2; and a second positive electrode active material layer which is formed on the first positive electrode active material layer and includes a third positive electrode active material represented by Formula 1,
wherein an average particle diameter D₅₀ of the third positive electrode active material is the same or different from an average particle diameter D₅₀ of the first positive electrode active material:
[Formula 1] Li₁₊ₐMn_{2-b}M¹_{b}O_{4-c}A_{c}
wherein, in Formula 1, M¹ is at least one element selected from the group consisting of aluminum (Al), lithium (Li), magnesium (Mg), zinc (Zn), boron (B), tungsten (W), nickel (Ni), cobalt (Co), iron (Fe), chromium (Cr), vanadium (V), ruthenium (Ru), copper (Cu), cadmium (Cd), silver (Ag), yttrium (Y), scandium (Sc), gallium (Ga), indium (In), arsenic (As), antimony (Sb), platinum (Pt), gold (Au), and silicon (Si), A is at least one element selected from the group consisting of fluorine (F), chlorine (Cl), bromine (Br), iodine (I), astatine (At), and sulfur (S), and 0≤a≤0.05, 0≤b≤0.5, and 0≤c≤0.1, and
[Formula 2] Li₁₊ₐ₁Mn_{z}Fe_{1-z}PO_{4-y}A¹_{y}
wherein, in Formula 2, A¹ is at least one element selected from the group consisting of F, Cl, Br, I, At, and S, and 0≤a1≤0.03, 0≤y≤0.8, and 0<z<1.

2. The positive electrode of claim 1, wherein a thickness ratio of the first positive electrode active material layer to the second positive electrode active material layer is in a range of 3:7 to 7:3.

3. The positive electrode of claim 1, wherein a thickness ratio of the first positive electrode active material layer to the second positive electrode active material layer is in a range of 3:7 to 5:5.

4. The positive electrode of claim 1, wherein the first positive electrode active material and the second positive electrode active material, which are included in the first positive electrode active material layer, are included in a weight ratio of 5:5 to 6:4.

5. The positive electrode of claim 1, wherein the first positive electrode active material has an average particle diameter D₅₀ of 3 µm to 10 µm, as measured by using a laser diffraction method.

6. The positive electrode of claim 1, wherein the third positive electrode active material has an average particle diameter D₅₀ of 3 µm to 20 µm, as measured by using a laser diffraction method.

7. The positive electrode of claim 1, wherein the first positive electrode active material is in a form of a single particle having a crystalline size of 100 nm to 500 nm, as measured by analyzing X-ray diffraction data.

8. The positive electrode of claim 1, wherein the first positive electrode active material layer and the second positive electrode active material layer each independently further comprise a conductive agent.

9. The positive electrode of claim 8, wherein the first positive electrode active material layer comprises a line-type conductive agent.

10. The positive electrode of claim 8, wherein the second positive electrode active material layer comprises a point-type conductive agent.

11. The positive electrode of claim 9, wherein the line-type conductive agent is carbon nanotubes.

12. The positive electrode of claim 10, wherein the point-type conductive agent has an average particle diameter D₅₀ of 5 nm to 50 nm.

13. The positive electrode of claim 10, wherein the point-type conductive agent comprises at least one selected from the group consisting of carbon black, acetylene black, Ketjen black, channel black, furnace black, lamp black, and thermal black.

14. A lithium secondary battery comprising the positive electrode of claim 1.

## Patentansprüche

1. Positivelektrode, die eine Schicht aus aktivem Material der Positivelektrode umfasst, die auf einem Positivelektrodenkollektor ausgebildet ist,
wobei die Schicht aus aktivem Material der Positivelektrode eine zweischichtige Struktur aufweist, einschließend: eine erste Schicht aus aktivem Material der Positivelektrode, die auf dem Positivelektrodenkollektor ausgebildet ist und ein erstes aktives Material der Positivelektrode, das durch die Formel 1 dargestellt ist, und ein zweites aktives Material der Positivelektrode, das durch die Formel 2 dargestellt ist, einschließt; und eine zweite Schicht aus aktivem Material der Positivelektrode, die auf der ersten Schicht aus aktivem Material der Positivelektrode ausgebildet ist und ein drittes aktives Material der Positivelektrode einschließt, das durch die Formel 1 dargestellt ist,
wobei ein durchschnittlicher Teilchendurchmesser D₅₀ des dritten aktiven Materials der Positivelektrode gleich oder verschieden von einem durchschnittlichen Teilchendurchmesser D₅₀ des ersten aktiven Materials der Positivelektrode ist:
[Formel 1] Li₁₊ₐMn_{2-b}M1_{b}O_{4-c}A_{c}
wobei in Formel 1 M1 mindestens ein Element ist, das ausgewählt ist aus der Gruppe bestehend aus Aluminium (Al), Lithium (Li), Magnesium (Mg), Zink (Zn), Bor (B), Wolfram (W), Nickel (Ni), Kobalt (Co), Eisen (Fe), Chrom (Cr), Vanadium (V), Ruthenium (Ru), Kupfer (Cu), Cadmium (Cd), Silber (Ag), Yttrium (Y), Scandium (Sc), Gallium (Ga), Indium (In), Arsen (As), Antimon (Sb), Platin (Pt), Gold (Au) und Silizium (si), A mindestens ein Element ist, das ausgewählt ist aus der Gruppe bestehend aus Fluor (F), Chlor (CI), Brom (Br), Jod (I), Astat (At) und Schwefel (S), und 0≤a≤0,05, 0≤b≤0,5, und 0≤c≤0,1, und
[Formel 2] Li₁₊ₐ₁Mn_{z}Fe_{1-z}PO_{4-y}A¹_{y}
wobei in Formel 2 A¹ mindestens ein Element ist, das ausgewählt ist aus der Gruppe bestehend aus F, Cl, Br, I, At und S, und 0≤a1≤0,03, 0≤y≤0,8 und 0<z<1.

2. Positivelektrode nach Anspruch 1, wobei das Dickenverhältnis der ersten Schicht aus aktivem Material der Positivelektrode zur zweiten Schicht aus aktivem Material der Positivelektrode in einem Bereich von 3:7 bis 7:3 liegt.

3. Positivelektrode nach Anspruch 1, wobei das Dickenverhältnis der ersten Schicht aus aktivem Material der Positivelektrode zur zweiten Schicht aus aktivem Material der Positivelektrode in einem Bereich von 3:7 bis 5:5 liegt.

4. Positivelektrode nach Anspruch 1, wobei das erste aktive Material der Positivelektrode und das zweite aktive Material der Positivelektrode, die in der ersten Schicht aus aktivem Material der Positivelektrode eingeschlossen sind, in einem Gewichtsverhältnis von 5:5 bis 6:4 eingeschlossen sind.

5. Positivelektrode nach Anspruch 1, wobei das erste aktive Material der Positivelektrode einen durchschnittlichen Teilchendurchmesser D₅₀ von 3 µm bis 10 µm aufweist, gemessen mit Hilfe eines Laserbeugungsverfahrens.

6. Positivelektrode nach Anspruch 1, wobei das dritte aktive Material der Positivelektrode einen durchschnittlichen Teilchendurchmesser D₅₀ von 3 µm bis 20 µm aufweist, gemessen mit Hilfe eines Laserbeugungsverfahrens.

7. Positivelektrode nach Anspruch 1, wobei das erste aktive Material der Positivelektrode in Form eines einzelnen Teilchens vorliegt, das eine Kristallgröße von 100 nm bis 500 nm aufweist, wie durch Analyse von Röntgenbeugungsdaten gemessen.

8. Positivelektrode nach Anspruch 1, wobei die erste Schicht aus aktivem Material der Positivelektrode und die zweite Schicht aus aktivem Material der Positivelektrode jeweils unabhängig voneinander weiter ein leitfähiges Mittel umfassen.

9. Positivelektrode nach Anspruch 8, wobei die erste Schicht aus aktivem Material der Positivelektrode ein leitfähiges Mittel vom Leitungstyp umfasst.

10. Positivelektrode nach Anspruch 8, wobei die zweite Schicht aus aktivem Material der Positivelektrode ein punktförmiges leitfähiges Mittel umfasst.

11. Positivelektrode nach Anspruch 9, wobei das leitfähige Mittel vom Leitungstyp aus Kohlenstoffnanoröhren besteht.

12. Positivelektrode nach Anspruch 10, wobei das punktförmige leitfähige Mittel einen durchschnittlichen Teilchendurchmesser D₅₀ von 5 nm bis 50 nm aufweist.

13. Positivelektrode nach Anspruch 10, wobei das punktförmige leitfähige Mittel mindestens eines aus der Gruppe umfasst, die aus Ruß, Acetylenschwarz, Ketjenschwarz, Kanalschwarz, Ofenschwarz, Lampenschwarz und Thermalschwarz besteht.

14. Lithiumsekundärbatterie, die die Positivelektrode nach Anspruch 1 umfasst.

## Revendications

1. Électrode positive comprenant une couche de matériau actif d'électrode positive formée sur un collecteur d'électrode positive,
dans laquelle la couche de matériau actif d'électrode positive présente une structure à deux couches incluant : une première couche de matériau actif d'électrode positive formée sur le collecteur d'électrode positive et incluant un premier matériau actif d'électrode positive représenté par la Formule 1 et un second matériau actif d'électrode positive représenté par la Formule 2 ; et une seconde couche de matériau actif d'électrode positive qui est formée sur la première couche de matériau actif d'électrode positive et inclut un troisième matériau actif d'électrode positive représenté par la Formule 1,
dans laquelle un diamètre moyen de particule D₅₀ du troisième matériau actif d'électrode positive est le même ou différent d'un diamètre moyen de particule D₅₀ du premier matériau actif d'électrode positive :
[Formule 1] Li₁₊ₐMn_{2-b}M¹_{b}O_{4-c}A_{c}
dans laquelle, dans la Formule 1, M¹ est au moins un élément sélectionné parmi le groupe consistant en l'aluminium (AI), le lithium (Li), le magnésium (Mg), le zinc (Zn), le bore (B), le tungstène (W), le nickel (Ni), le cobalt (Co), le fer (Fe), le chrome (Cr), le vanadium (V), le ruthénium (Ru), le cuivre (Cu), le cadmium (Cd), l'argent (Ag), l'yttrium (Y), le scandium (Sc), le gallium (Ga), l'indium (In), l'arsenic (As), l'antimoine (Sb), le platine (Pt), l'or (Au) et le silicium (Si), A est au moins un élément sélectionné parmi le groupe consistant en le fluor (F), le chlore (Cl), le brome (Br), l'iode (I), l'astate (At) et le soufre (S), et 0 ≤ a ≤ 0,05, 0 ≤ b ≤ 0,5, et 0 ≤ c ≤ 0,1, et
[Formule 2] Li₁₊ₐ₁Mn_{z}Fe_{1-z}PO_{4-y}A¹_{y}
dans laquelle, dans la Formule 2, A¹ est au moins un élément sélectionné parmi le groupe consistant en F, Cl, Br, I, At, et S, et 0 ≤ a1 ≤ 0,03, 0 ≤ y ≤ 0,8, et 0 < z < 1.

2. Électrode positive selon la revendication 1, dans laquelle un rapport d'épaisseur de la première couche de matériau actif d'électrode positive par rapport à la seconde couche de matériau actif d'électrode positive est dans une plage de 3:7 à 7:3.

3. Électrode positive selon la revendication 1, dans laquelle un rapport d'épaisseur de la première couche de matériau actif d'électrode positive par rapport à la seconde couche de matériau actif d'électrode positive est dans une plage de 3:7 à 5:5.

4. Électrode positive selon la revendication 1, dans laquelle le premier matériau actif d'électrode positive et le second matériau actif d'électrode positive, qui sont inclus dans la première couche de matériau actif d'électrode positive, sont inclus dans un rapport pondéral de 5:5 à 6:4.

5. Électrode positive selon la revendication 1, dans laquelle le premier matériau actif d'électrode positive présente un diamètre moyen de particule D₅₀ de 3 µm à 10 µm, mesuré en utilisant une méthode de diffraction laser.

6. Électrode positive selon la revendication 1, dans laquelle le troisième matériau actif d'électrode positive présente un diamètre moyen de particule D₅₀ de 3 µm à 20 µm, mesuré en utilisant une méthode de diffraction laser.

7. Électrode positive selon la revendication 1, dans laquelle le premier matériau actif d'électrode positive est sous forme d'une particule unique présentant une taille cristalline de 100 nm à 500 nm, mesurée par l'analyse de données de diffraction des rayons X.

8. Électrode positive selon la revendication 1, dans laquelle la première couche de matériau actif d'électrode positive et la seconde couche de matériau actif d'électrode positive comprennent en outre chacune indépendamment un agent conducteur.

9. Électrode positive selon la revendication 8, dans laquelle la première couche de matériau actif d'électrode positive comprend un agent conducteur de type ligne.

10. Électrode positive selon la revendication 8, dans laquelle la seconde couche de matériau actif d'électrode positive comprend un agent conducteur de type point.

11. Électrode positive selon la revendication 9, dans laquelle l'agent conducteur de type ligne est constitué de nanotubes de carbone.

12. Électrode positive selon la revendication 10, dans laquelle l'agent conducteur de type point présente un diamètre moyen de particule D₅₀ de 5 nm à 50 nm.

13. Électrode positive selon la revendication 10, dans laquelle l'agent conducteur de type point comprend au moins un élément sélectionné parmi le groupe consistant en le noir de carbone, le noir d'acétylène, le noir de Ketjen, le noir de canal, le noir de four, le noir de lampe et le noir thermique.

14. Batterie secondaire au lithium comprenant l'électrode positive de la revendication 1.
